# EUROPEAN PATENT SPECIFICATION

(11) **EP 0 875 321 B1**
(45) Date of publication and mention of the grant of the patent: **23.02.2000**
(21) Application number: 97830200.8
(22) Date of filing: 30.04.1997
(51) Int. Cl.: B23B 31/11, B23C 5/04

(54) **Rotating tool for machine tool and machine tool using said tool**
Rotierendes Werkzeug für Werkzeugmaschine und Werkzeugsmaschine die dieses Werkzeug verwendet
Outil rotatif pour machine-outil et machine-outil utilisant cet outil

(43) Date of publication of application: 04.11.1998
(73) Proprietor: DITTA BACCI PAOLINO DI GIUSEPPE BACCI DI AGOSTINO BACCI, I-56021 Cascina, Pisa (IT)
(72) Inventor: Ruggieri, Alberto, 56025 Pontedera, Pisa (IT)
(74) Representative: Mannucci, Michele

(56) References cited:
- EP-A- 0 123 156
- DE-A- 3 642 132

## Description

The present invention relates to a rotating tool according to the preamble of claim 1 and as known e.g. from EP-A-0 123 156.

The invention also relates to a machine tool with a rotating spindle and more specifically - but not exclusively - to copy milling machines for machining pieces made of wood, such as elongate parts for furniture, chairs and the like.

Reference will frequently be made below to copy milling machines, that is to say the type in which the movement of the tool in relation to the piece is controlled by a template which reproduces the profile which the piece being machined is to assume, or by a central numerical control unit using a programme which allows the reproduction of the movements which bring about the production of the desired profile. This is because the present invention (as will be explained below) makes it possible to obtain particular advantages if applied to these machines. Moreover, it is understood that the invention is not limited to this application.

At present, tools equipped with a frustoconical tang for fixing to the spindle are made with a tang which extends axially beyond the active surface of the tool. These are typically used in machine tools for machining metals.

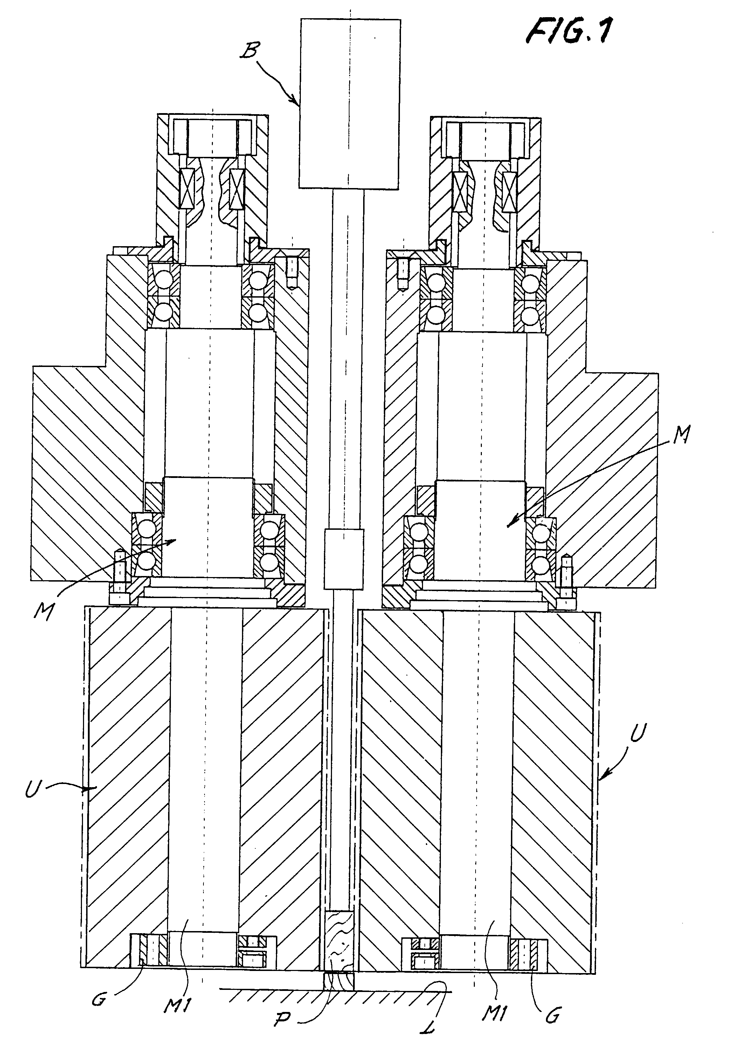

In currently known copy milling machines, the spindle shaft of each operating unit is equipped with a front portion onto which the tool is slipped, which is then locked by means of a threaded ring nut which is screwed onto the front end of the spindle shaft. Fig. 1 shows the conventional arrangement of two spindles of a machine of this type which machine, by means of two tools, two opposite faces of a piece P. The spindle shafts are indicated by M, and M1 indicates their front portions onto which the two tools U are slipped and locked by the ring nuts G. B indicates a means of locking the piece P on the working surface L.

The minimum distance between the surfaces of the tools is dictated by the radial dimension of the supports of the spindle shaft. This dimension is in turn determined by the great stresses to which these tools, which rotate at high speeds (typically of the order of 8000 rpm) with applied powers of the order of up to 20 HP, are subjected. The use of conventional tools with a frustoconical tang for this type of operating machines is not possible because it would involve the tool being moved away from the supports of the spindle as a result of the presence of the tang and therefore an increase in the flexural stresses on the spindle and the consequent necessity of increasing the size of the supports. This disadvantage is not overcome by arranging the conical interface inside the spindle either because even then there would be an increase in the size of the supports.

In any case, the use of tools with a conical interface of conventional type in copy milling machines would make it necessary to redesign the machine itself.

On the other hand, the system for mounting the tools illustrated in Fig. 1 is particularly inconvenient because these tools have a great height (typically of the order of 15-20 cm) and the operating units have no movement along the axis of the spindle.

A first aim of the present invention is the production of a tool with a conical interface which makes it possible to overcome the limitations of use of the conventional tools of this type.

Another aim of the present invention is the production of a tool with a conical interface which makes it possible to reduce the stresses on the spindles and the size of the respective supports.

A further aim of the present invention is the production of a tool with a conical interface which can be used in machine tools which have parallel, opposite pairs of spindles which have to machine in close proximity.

Yet another aim of the present invention is the production of a tool with a conical interface, which is particularly suitable for use in copy milling machines.

From another point of view, the aim of the invention is the production of a machine tool with a pair of spindles with parallel axes and with a conical interface for the attachment of the tools.

These and other aims and advantages, which will be clear to experts in the field from reading the text below, are achieved in practice with a rotating tool with a conical interface in which the frustoconical surface is accommodated in a seat recessed into the tool, that is to say in a position so as not to project in relation to the active surface of the tool, in other words that surface which is equipped with cutters. The recessed seat is of a shape and size which allow the insertion of the end part of the spindle, on which the frustoconical surface complementing the conical interface is formed.

Preferably, the frustoconical surface defines in the recessed seat a frustoconical tang similar to that of conventional tools but so as to reduce the distance of the tool in relation to the supports of the spindle and to avoid increasing the radial dimension of these.

According to a particularly advantageous but non-limiting embodiment of the invention, the frustoconical surface is formed at one end of a small shaft which is inserted in an axial hole of the tool and can be locked to the tool in an appropriate manner, for example by means of a ring nut or other equivalent means preferably arranged at the opposite end of the small shaft.

By making the tool with two opposite recessed seats at the ends of the axial through-hole, it is then possible to mount the tool in either of two alternative positions simply by inverting the position of the small shaft in the through-hole and therefore arranging the frustoconical surface alternatively in one or other of said two seats.

Further advantageous characteristics of the tool according to the invention are indicated in the attached claims.

The use of a tool of the type described above in a machine tool of the type comprising two spindles with parallel axes (for example a copy milling machine) makes it possible to achieve specific advantages. In fact, this particular type of conical interface makes it possible to retain the limited radial dimensions of existing spindles, to leave unchanged the position of the operating unit in relation to the bench supporting the piece, and to achieve easy mounting and demounting of the tool from the spindle even if the latter has no movement along its own axis.

Advantageous embodiments of the machine according to the invention are indicated in the attached claims.

The invention will be better understood by following the description and the attached drawing which shows a practical non-limiting embodiment of the invention. More specifically, in the drawing,
Fig. 1 shows an arrangement according to the state of the art,
Fig. 2 shows a lateral view of a copy milling machine in which the tool according to the invention finds advantageous application, and
Figs 3 and 4 show a spindle with the associated tool in the demounted and mounted state respectively.

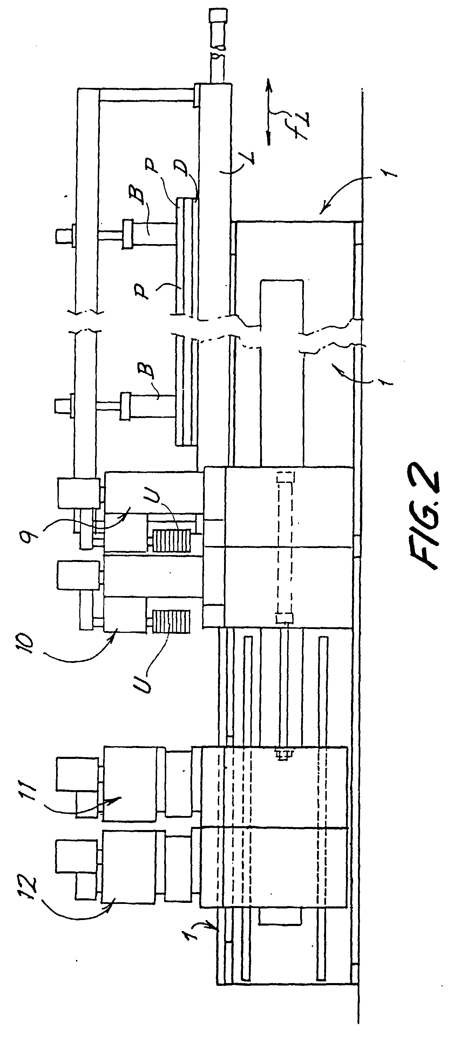

Fig. 1 (already described) illustrates the conventional system of mounting the tools in a copy milling machine, the general structure of which is shown in Fig. 2. Machines of this type are known per se and will be described only to the extent necessary for understanding the invention. For a more detailed description, reference can be made, for example, to Italian Patent No. 1,238,927.

The machine has a base 1 with a working surface L which is movable in the directions fL and on which a template D and a piece P are fixed by locking means B. Reference numbers 9, 10, 11 and 12 indicate operating units with tools generally indicated by U. A corresponding arrangement of operating units is provided on the opposite side.

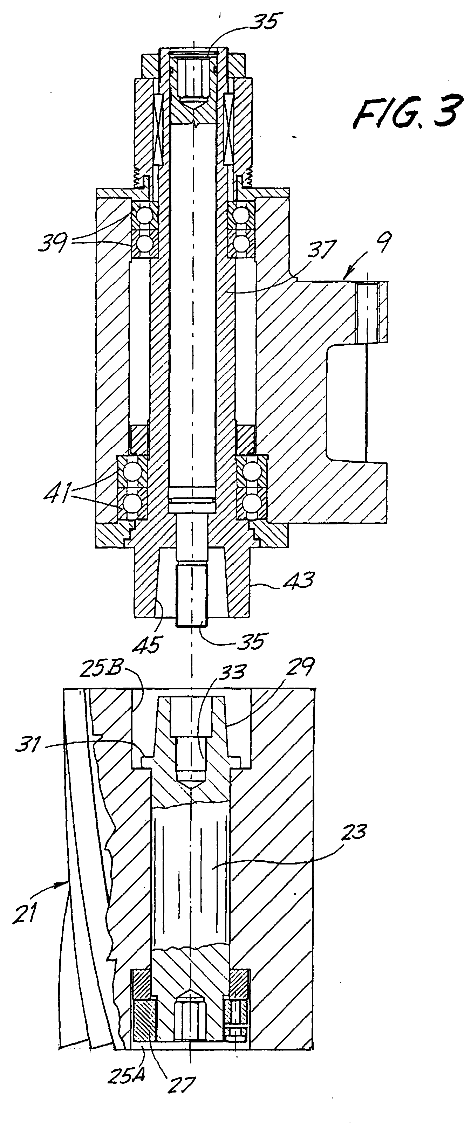

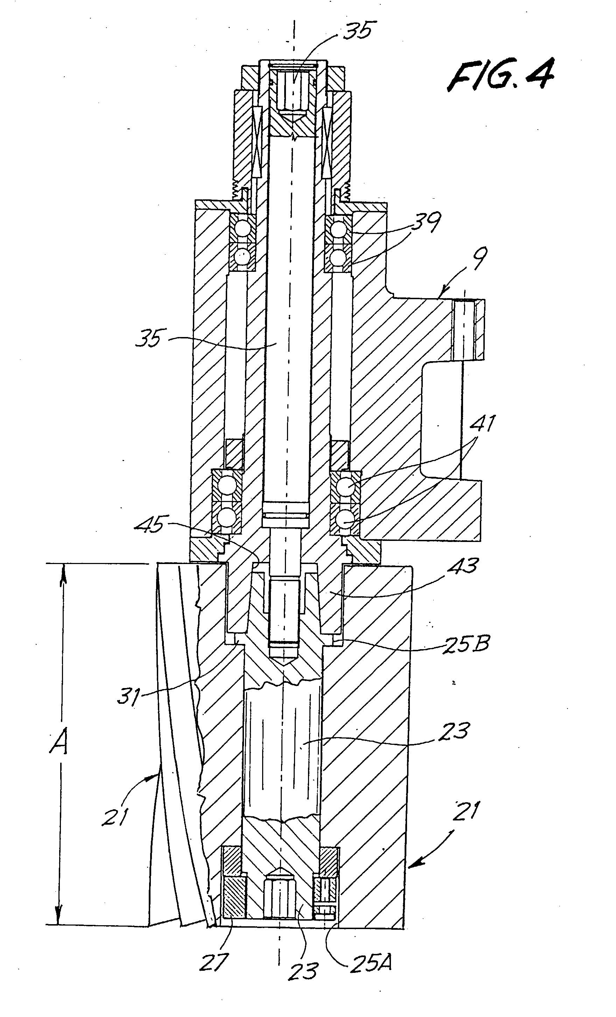

The structure of the spindles and of the tools is shown in Figs 3 and 4.

In said figures, the tool is generally indicated by 21 and has an axial through-hole, in which a small shaft 23 is inserted and locked. At the ends of the axial through-hole, two recessed seats 25A, 25B are made in the axial extent A of the tool. A locking ring nut 27 screwed onto the lower end of the small shaft 23 is accommodated in the seat 25A. At the opposite end, the small shaft 23 has a frustoconical surface 29 defining a frustoconical tang accommodated inside the seat 25B. At the base of the frustoconical surface 29, a collar 31 is provided, which forms a stop on the mouth of the axial hole for locking the small shaft.

The frustoconical tang formed by the surface 29 has a threaded axial hole 33 inside which a stay bolt 35 coaxial with the spindle engages, which can be actuated at the rear for gripping the tool on the spindle 37. The latter is supported by bearings 39, 41 and has a projecting front portion 43 which, in the mounted position (Fig. 4), is inserted in the recessed seat 25B. The spindle portion 43 has on the inside a frustoconical cavity 45 which constitutes the female part of the conical interface, the male part of which is constituted by the surface 29.

By unscrewing the ring nut 27 and inverting the position of the small shaft 23, it is possible to introduce the frustoconical tang into the seat 25A and therefore invert the functioning position of the tool, for example in order to use alternatively two different cutting profiles arranged on adjacent portions of the tool.

It is understood that the drawing shows only an example given solely by way of practical demonstration of the invention, it being possible for said invention to vary in form and arrangement without moreover leaving the scope of the idea which forms the invention itself. Any presence of reference numbers in the enclosed claims has the purpose of facilitating reading of the claims with reference to the description and to the drawing and does not limit the scope of protection represented by the claims.

## Claims

1. A rotating tool (U; 21) adapted to be coupled to a rotating spindle (37) of a machine tool, the tool (U; 21) comprising a frustoconical surface (29) for engagement with a corresponding conical cavity (45) on the spindle (37) characterized in that said frustoconical surface (29) is accommodated inside a seat (25B) recessed into the tool (21), the size of said seat being such that it allows the insertion of the end (43) of the spindle (37).

2. Tool (U; 21) according to Claim 1, characterized in that said frustoconical surface (29) is made at the end of a small shaft (23) restrained inside an axial through-hole of said tool (U; 21).

3. Tool (U; 21) according to Claim 2, characterized in that said axial through-hole ends, at both its ends, in corresponding seats (25A, 25B) recessed in said tool (U; 21), the small shaft (23) being capable of being restrained in said axial through-hole in two different alternative positions, by arranging the frustoconical surface (29) alternatively in one or the other of said recessed seats (25A; 25B).

4. Tool (U; 21) according to Claim 2 or 3, characterized in that gripping members (27) for locking the small shaft (23) in said axial through-hole are provided at the end of said small shaft (23) opposite the frustoconical surface (29).

5. Tool (U; 21) according to any one of the preceding claims, characterized in that it has a stop collar (31) roughly in the region of the base of the frustoconical surface (29).

6. Tool (U; 21) according to any one of the preceding claims, characterized in that said frustoconical surface (29) constitutes the external surface of a tang which forms the male part of a conical interface, the female part being formed by a corresponding frustoconical surface (45) in the spindle (37).

7. A machine tool comprising at least one operating unit (9; 10; 11; 12) with a spindle (37) and a rotating tool (U; 21) mounted on said spindle, characterized in that said tool (U; 21) is a tool (U; 21) according to any one of Claims 1 to 6.

8. Machine tool according to Claim 7, characterized in that it comprises at least one pair of parallel spindles each having a tool (U; 21) according to any one of Claims 1 to 6, said tools (U; 21) acting on a piece (P) positioned between them.

9. A copy milling machine comprising a bench (L) on which the pieces (P) to be machined are fixed and at least one pair of operating units (9; 10; 11; 12) arranged on two opposite sides of the bench (L) and each equipped with a spindle (37), characterized in that a tool (U; 21) according to any one of Claims 1 to 6 is mounted on each of said spindles (37).

10. Milling machine according to Claim 9, characterized in that said spindles (37) have a vertical axis.

11. Milling machine according to Claim 9 or 10, characterized in that said bench (L) is movable.

## Patentansprüche

1. Rotierendes Werkzeug (U; 21), das mit einer rotierenden Spindel (36) einer Werkzeugmaschine kuppelbar ist, mit einer konischen Fläche (29) für den Eingriff in einen entsprechenden konischen Hohlraum (45) an der Spindel (37), dadurch **gekennzeichnet**, daß die konische Oberfläche (29) innerhalb eines in dem Werkzeug (21) vertieft ausgebildeten Sitzes (25B) aufgenommen ist, wobei die Abmessung des Sitzes derart ist, daß er die Einführung des Endes (43) der Spindel (37) ermöglicht.

2. Werkzeug (U; 21) gemäß Anspruch 1, dadurch **gekennzeichnet**, daß die konische Oberfläche (29) am Ende einer kleinen Welle (23) vorgesehen ist, die innerhalb einer axialen Bohrung des Werkzeugs (U; 21) festgelegt ist.

3. Werkzeug (U; 21) nach Anspruch 2, dadurch **gekennzeichnet**, daß die axiale Bohrung an beiden Enden in entsprechenden Sitzen (25A, 25B) endet, die in dem Werkzeug (U; 21) vertieft ausgebildet sind, wobei die kleine Welle (23) in der axialen Bohrung in zwei unterschiedlichen alternativen Positionen festlegbar ist, indem die konische Oberfläche (29) wahlweise in dem einen oder dem anderen der vertieften Sitze (25A, 25B) angeordnet wird.

4. Werkzeug (U; 21) nach Anspruch 2 oder 3, dadurch **gekennzeichnet**, daß Greifglieder (27) zum Verriegeln der kleinen Welle (27) in der axialen Bohrung an dem Ende der kleinen Welle (23) gegenüber der konischen Oberfläche (29) vorgesehen sind.

5. Werkzeug (U; 21) nach einem der vorangehenden Ansprüche, dadurch **gekennzeichnet**, daß es einen Anschlagbund (31) ungefähr im Bereich der Basis der konischen Oberfläche (29) aufweist.

6. Werkzeug (U; 21) nach einem der vorangehenden Ansprüche, dadurch **gekennzeichnet**, daß die konische Oberfläche (29) die Außenfläche eines Zapfens bildet, der den Einsteckteil einer konischen Steckverbindung bildet, deren Aufnahmeteil von einer entsprechenden konischen Oberfläche (45) in der Spindel (37) gebildet wird.

7. Werkzeugmaschine mit mindestens einer Arbeitseinheit (9, 10, 11, 12) mit einer Spindel (27) und einem an der Spindel montierten, rotierenden Werkzeug (U; 21 ), dadurch **gekennzeichnet**, daß das Werkzeug (U; 21) ein Werkzeug (U; 21) gemäß einem der Ansprüche 1 bis 6 ist.

8. Werkzeugmaschine nach Anspruch 7, dadurch gekennzeichnet , daß sie mindestens ein Paar von parallelen Spindeln aufweist, von denen jede ein Werkzeug (U; 21) gemäß einem der Ansprüche 1 bis 6 aufweist, wobei die Werkzeuge (U; 21) auf ein zwischen ihnen positioniertes Werkstück (P) einwirken.

9. Kopierfräsmaschine mit einer Bank (L), auf der die zu bearbeitenden Werkstücke befestigt sind, und mindestens einem Paar von Arbeitseinheiten (9, 10, 11, 12), die an zwei entgegengesetzen Enden der Bank (L) angeordnet und jeweils mit einer Spindel (37) versehen sind, dadurch **gekennzeichnet**, daß an jeder Spindel ein Werkzeug (U; 21) gemäß einem der Ansprüche 1 bis 6 montiert ist.

10. Fräsmaschine nach Anspruch 9, dadurch **gekennzeichnet**, daß die Spindeln (37) eine vertikale Achse haben.

11. Fräsmaschine nach Anspruch 9 oder 10, dadurch **gekennzeichnet**, daß die Bank (L) beweglich ist.

## Revendications

1. Outil rotatif (U, 21) prévu pour être couplé à une broche rotative (37) d'une machine-outil, l'outil (U ; 21) comprenant une surface tronconique (29) pour un engagement avec une cavité conique correspondante (45) sur la broche (37), caractérisé en ce que ladite surface tronconique (29) est logée à l'intérieur d'un siège (25B) en creux dans l'outil (21), la dimension dudit siège étant telle qu'elle permet l'insertion de l'extrémité (43) de la broche (37).

2. Outil (U ; 21) selon la revendication 1, caractérisé en ce que ladite surface tronconique (29) est réalisée à l'extrémité d'un petit arbre (23) maintenu à l'intérieur d'un trou traversant axial dudit outil (U ; 21).

3. Outil (U ; 21) selon la revendication 2, caractérisé en ce que ledit trou traversant axial se termine, à chacune de ses extrémités, dans des sièges correspondants (25A, 25B) en creux dans ledit outil (U ; 21), le petit arbre (23) pouvant être maintenu dans ledit trou traversant axial dans deux positions différentes en option en agençant la surface tronconique (29), de façon alternée, dans l'un ou l'autre desdits sièges en creux (25A ; 25B).

4. Outil (U ; 21) selon la revendication 2 ou 3, caractérisé en ce que les pièces de saisie (27) pour le blocage du petit arbre (23) dans ledit trou traversant axial sont prévues à l'extrémité dudit petit arbre (23) à l'opposé de la surface tronconique (29).

5. Outil (U ; 21) selon l'une quelconque des revendications précédentes, caractérisé en ce qu'il possède une bague de butée (31) à peu près dans la zone de la base de la surface tronconique (29).

6. Outil (U ; 21) selon l'une quelconque des revendications précédentes, caractérisé en ce que ladite surface tronconique (29) constitue la surface externe d'une queue formant la partie mâle d'une interface conique, la partie femelle étant formée d'une surface tronconique correspondante (45) de la broche (37).

7. Machine-outil comprenant au moins une unité fonctionnelle (9 ; 10 ; 11 ; 12) avec une broche (37) et un outil rotatif (U ; 21) monté sur ladite broche, caractérisée en ce que ledit outil (U ; 21) est un outil (U ; 21) selon l'une quelconque des revendications 1 à 6.

8. Machine outil selon la revendication 7, caractérisée en ce qu'elle comprend au moins une paire de broches parallèles possédant chacune un outil (U ; 21) selon l'une quelconque des revendications 1 à 6, lesdits outils (U ; 21) agissant sur une pièce (P) placée entre eux.

9. Machine à fraiser par reproduction comprenant un banc (L) sur lequel les pièces (P) à usiner sont fixées et au moins une paire d'unités fonctionnelles (9 ; 10 ; 11 ; 12) prévues sur deux cotés opposés du banc (L) et munies chacune d'une broche (37), caractérisée en ce qu'un outil (U ; 21) selon l'une quelconque des revendications 1 à 6 est monté sur chacune desdites broches (37).

10. Machine de fraisage selon la revendication 9, caractérisée en ce que lesdites broches (37) ont un axe vertical.

11. Machine de fraisage selon la revendication 9 ou 10, caractérisée en ce que ledit banc (L) est mobile.
